# EUROPEAN PATENT SPECIFICATION

(11) **EP 3 157 194 B1**
(45) Date of publication and mention of the grant of the patent: **15.08.2018**
(21) Application number: 14894784.9
(22) Date of filing: 17.09.2014
(51) Int. Cl.: H04L 12/10, H04L 12/40, H04M 19/08, H04B 10/80, H04B 1/00

(54) **REVERSE POWER SUPPLY METHOD, DEVICE AND STORAGE MEDIUM**
UMGEKEHRTES STROMVERSORGUNGSVERFAHREN, VORRICHTUNG UND SPEICHERMEDIUM
PROCÉDÉ D'ALIMENTATION ÉLECTRIQUE INVERSE, DISPOSITIF, ET SUPPORT DE STOCKAGE

(30) Priority: 13.06.2014 CN 201410264443
(43) Date of publication of application: 19.04.2017
(73) Proprietor: ZTE Corporation, Shenzhen, Guangdong 518057 (CN)
(72) Inventor: LIU, Peizhang, Shenzhen, Guangdong 518057 (CN); CHEN, Zhiguang, Shenzhen, Guangdong 518057 (CN); LU, Zhaochun, Shenzhen, Guangdong 518057 (CN)
(74) Representative: Lavoix
(86) International application number: PCT/CN2014/086708
(87) International publication number: WO 2015/188489

(56) References cited:
- EP-A1- 2 053 778
- WO-A1-2011/123314
- WO-A1-2012/117371
- CN-A- 102 655 559
- CN-Y- 2 728 121
- CN-Y- 201 174 707
- US-A1- 2010 150 556

## Description

### TECHNICAL FIELD

The disclosure relates to a related technology for reverse power supply in the field of communication, and in particular to a reverse power supply method, a power supply adapter, x Digital Subscriber Line (xDSL) central office equipment and a storage medium.

### BACKGROUND

A Power Over Ethernet (POE) system includes two parts, i.e. Power Supply Equipment (PSE) and a Powered device (PD). Under a normal condition, POE refers to power supply from central office equipment to terminal equipment, and reverse power supply refers to power supply from the terminal equipment to the central office equipment. At present, all systems adopting a reverse power supply technology are Ethernet-based, and for a place where no Ethernet cables are arranged or it is inconvenient to arrange Ethernet cables, it is impossible to directly adopt a POE technology.

Very-high-data-rate Digital Subscriber Line (VDSL) is a VDSL access manner, a VDSL2 standard has been released at present, and VDSL2 may provide a 100Mbps symmetric bandwidth within a short distance, may well support an ordinary data service, an interactive game, a Voice over Internet Phone (VOIP) service, an Internet Protocol Television (IPTV), a High-Definition TV (HDTV) and the like, and is particularly suitable for a commercial user and a high-end home user. VDSL central office equipment is usually mounted in a computer room and a corridor and outdoors, while VDSL terminal equipment is usually mounted in a house or office of a user, and both of them adopt independent power supply at present, which may bring inconvenience and also cause energy waste.

US patent application publication No. US2010/0150556 A1 discloses a system for powering a network element of a fiber optic wide area network.

### SUMMARY

The disclosure is intended to provide a reverse power supply method, a power supply adapter, xDSL central office equipment and a storage medium.

The features of the methods and devices according to the present disclosure are defined in the independent claims, and the preferable features according to the present invention are defined in the dependent claims.

In order to achieve the purpose, the technical solutions of the disclosure are implemented as follows.

The disclosure provides a reverse power supply method, which may include that:
a power supply adapter mixes an xDSL signal and Direct Current (DC); and
the power supply adapter transmits a mixed signal to xDSL central office equipment through a subscriber line.

In the solution, before the step that the power supply adapter mixes the xDSL signal and the DC, the method may further include that: the power supply adapter receives the xDSL signal sent by xDSL terminal equipment.

In the solution, the step that the power supply adapter mixes the xDSL signal and the DC may include that: an Alternating Current-Direct Current (AC-DC) conversion circuit of the power supply adapter converts input AC into DC, and transfers the DC to a first xDSL separator of the power supply adapter, and the first xDSL separator mixes the DC and an input xDSL signal.

In the solution, after the step that the first xDSL separator mixes the DC and the input xDSL signal, the method may further include that: a PSE control circuit of the power supply adapter detects whether there exists a PD, and determines whether to supply power to the PD according to a detection result.

In the solution, the step that the power supply adapter mixes the xDSL signal and the DC may include that: the AC-DC conversion circuit of the power supply adapter converts input AC into DC, and transfers the DC to a first filter circuit of the power supply adapter, and the first filter circuit mixes the DC and an input xDSL signal.

In the solution, after the step that the first filter circuit mixes the DC and the input xDSL signal, the method may further include that: the PSE control circuit of the power supply adapter detects whether there exists a PD, and determines whether to supply power to the PD according to a detection result.

In the solution, after the step that the power supply adapter transmits the mixed signal to the xDSL central office equipment through the subscriber line, the method may further include that: the xDSL central office equipment separates the mixed signal to acquire DC required by the xDSL central office equipment.

In the solution, the step that the xDSL central office equipment separates the mixed signal to acquire the DC required by the xDSL central office equipment may include that: a second xDSL separator of the xDSL central office equipment separates the input mixed signal to acquire the xDSL signal and the DC, and transfers the DC to a DC-DC conversion circuit of the xDSL central office equipment, and the DC-DC conversion circuit converts the DC into the DC required by the xDSL central office equipment.

In the solution, the step that the xDSL central office equipment separates the mixed signal to acquire the DC required by the xDSL central office equipment may include that: a second filter circuit of the xDSL central office equipment separates the input mixed signal to acquire the xDSL signal and the DC, and transfers the DC to the DC-DC conversion circuit in the xDSL central office equipment, and the DC-DC conversion circuit converts the DC into the DC required by the xDSL central office equipment.

The disclosure provides a reverse power supply method, which may include that:
xDSL central office equipment separates a received mixed signal; and
the xDSL central office equipment acquires DC required by the xDSL central office equipment,
herein the mixed signal may be a signal mixed from an xDSL signal and DC and transmitted to the xDSL central office equipment through a subscriber line by a power supply adapter.

In the solution, the step that the xDSL central office equipment separates the mixed signal to acquire the DC required by the xDSL central office equipment may include that: a second xDSL separator of the xDSL central office equipment separates the input mixed signal to acquire the xDSL signal and the DC, and transfers the DC to a DC-DC conversion circuit of the xDSL central office equipment, and the DC-DC conversion circuit converts the DC into the DC required by the xDSL central office equipment.

In the solution, the step that the xDSL central office equipment separates the mixed signal to acquire the DC required by the xDSL central office equipment may include that: a second filter circuit of the xDSL central office equipment separates the input mixed signal to acquire the xDSL signal and the DC, and transfers the DC to the DC-DC conversion circuit in the xDSL central office equipment, and the DC-DC conversion circuit converts the DC into the DC required by the xDSL central office equipment.

The disclosure provides a power supply adapter, which may include: an AC-DC conversion circuit and a first xDSL separator, in which:
the AC-DC conversion circuit may be configured to convert input AC into DC, and transfer the DC to the first xDSL separator; and
the first xDSL separator may be configured to mix the DC and an input xDSL signal.

In the solution, the power supply adapter may further include a PSE control circuit, configured to detect whether there exists a PD, and determine whether to supply power to the PD according to a detection result.

The embodiments of the disclosure further provide a power supply adapter, which may include: an AC-DC conversion circuit and a first filter circuit, in which:
the AC-DC conversion circuit may be configured to convert input AC into DC, and transfer the DC to the first filter circuit; and
the first filter circuit may be configured to mix the DC and an input xDSL signal.

In the solution, the power supply adapter may further include a PSE control circuit, configured to detect whether there exists a PD, and determine whether to supply power to the PD according to a detection result.

The disclosure provides xDSL central office equipment, which may include: a second xDSL separator and a DC-DC conversion circuit, in which:
the second xDSL separator may be configured to separate a received mixed signal to acquire an xDSL signal and DC, and transfer the DC to the DC-DC conversion circuit; and
the DC-DC conversion circuit may be configured to convert the DC into DC required by the xDSL central office equipment,
herein the mixed signal may be a signal mixed from the xDSL signal and the DC and transmitted to the xDSL central office equipment through a subscriber line by a power supply adapter.

In the solution, the xDSL central office equipment may further include a PD detection circuit and an xDSL signal processing circuit, in which:
the PD detection circuit may be configured to provide detection about whether there exists a PD; and
the xDSL signal processing circuit may be configured to process xDSL service data according to the xDSL signal.

The disclosure provides xDSL central office equipment, which may include: a second filter circuit and a DC-DC conversion circuit, in which:
the second filter circuit may be configured to separate a received mixed signal to acquire an xDSL signal and DC, and transfer the DC to the DC-DC conversion circuit; and
the DC-DC conversion circuit may be configured to convert the DC into DC required by the xDSL central office equipment,
herein the mixed signal may be a signal mixed from the xDSL signal and the DC and transmitted to the xDSL central office equipment through a subscriber line by a power supply adapter.

In the solution, the xDSL central office equipment may further include a resistance-capacitance detection circuit and an xDSL signal processing circuit, in which:
the resistance-capacitance detection circuit may be configured to provide detection about whether there exists a PD; and
the xDSL signal processing circuit may be configured to process xDSL service data according to the xDSL signal.

The disclosure provides a storage medium having stored therein computer programs configured to execute the abovementioned reverse power supply method.

According to the reverse power supply method, power supply adapter and xDSL central office equipment provided by the embodiments of the disclosure, the power supply adapter mixes the xDSL signal and the DC, and transmits the mixed signal to the xDSL central office equipment through the subscriber line. In such a manner, it is possible to provide power from power supply equipment arranged in a house of a user to small-sized xDSL central office equipment arranged in a corridor or outdoors under the condition that xDSL access is adopted for a place where there is no Ethernet cable or it is inconvenient to arrange an Ethernet cable but there is a subscriber line, and power is supplied to the central office equipment arranged outdoors when the user requires communication, and may be cut off when the user does not require communication, so that convenience, power saving, working reliability, control flexibility, low power consumption and high rate are ensured.

### BRIEF DESCRIPTION OF THE DRAWINGS

Fig. 1 is a flowchart of a reverse power supply method according to embodiment 1 of the disclosure;
Fig. 2 is a flowchart of a reverse power supply method according to embodiment 2 of the disclosure;
Fig. 3 is a flowchart of a reverse power supply method according to embodiment 3 of the disclosure;
Fig. 4 is a flowchart of a reverse power supply method according to embodiment 4 of the disclosure;
Fig. 5 is a structure diagram of a power supply adapter according to embodiment 1 of the disclosure;
Fig. 6 is a structure diagram of a power supply adapter according to embodiment 2 of the disclosure;
Fig. 7 is a structure diagram of xDSL central office equipment according to embodiment 1 of the disclosure;
Fig. 8 is a structure diagram of xDSL central office equipment according to embodiment 2 of the disclosure;
Fig. 9 is a structure diagram of a reverse power supply system according to embodiment1 of the disclosure; and
Fig. 10 is a structure diagram of a reverse power supply system according to embodiment 2 of the disclosure.

### DETAILED DESCRIPTION

The disclosure will be further described below with reference to the drawings and embodiments in detail.

In an embodiment of the disclosure, a power supply adapter mixes an xDSL signal and DC, and transmits a mixed signal to xDSL central office equipment through a subscriber line; and the xDSL central office equipment separates the mixed signal to acquire DC required by the xDSL central office equipment.

Here, the xDSL signal may be: an Asymmetric Digital Subscriber Line (ADSL) signal, a Rate Automatic adapt Digital Subscriber Line (RADSL) signal, a VDSL signal, a Symmetric Digital Subscriber Line (SDSL) signal, a High-speed Digital Subscriber Line (HDSL) signal, a new-generation bandwidth standard G.fast signal (which is also transmitted by adopting a twisted pair at a rate capable of maximally reaching 1Gbit/s) and the like, and the xDSL signal is preferably a VDSL signal.

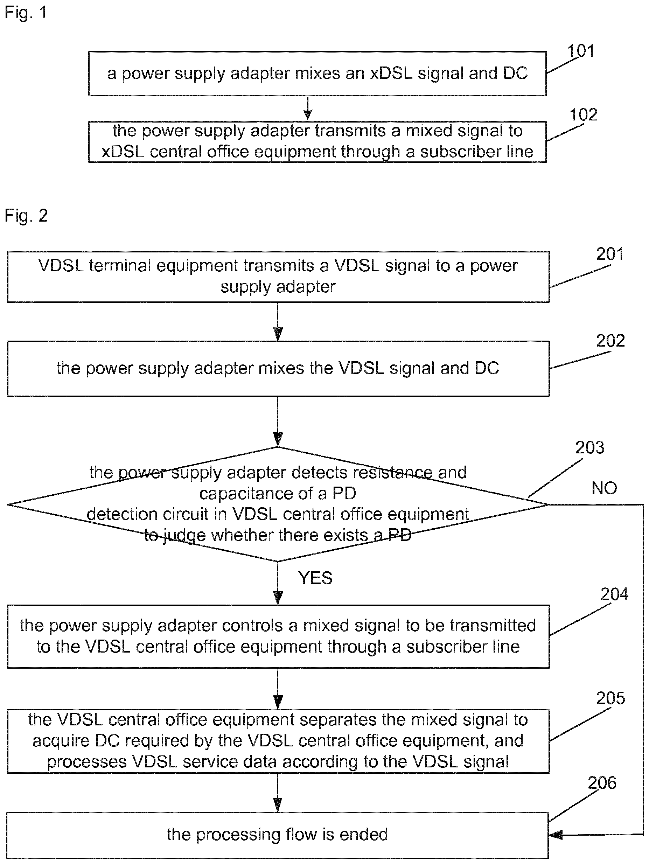

Fig. 1 is a flowchart of a reverse power supply method according to embodiment 1 of the disclosure, and as shown in Fig. 1, a flow of the reverse power supply method of the embodiment includes the following steps.

Step 101: a power supply adapter mixes an xDSL signal and DC;
here, the xDSL signal is configured to transmit service data; the xDSL signal may be: an ADSL signal, an RADSL signal, a VDSL signal, an SDSL signal, an HDSL signal, a G.fast signal and the like, and the xDSL signal is preferably a VDSL signal;
before the step that the power supply adapter mixes the xDSL signal and the DC, the method further includes that: the power supply adapter receives the xDSL signal sent by xDSL terminal equipment through an xDSL link; and here, the xDSL terminal equipment may be a modem, an uplink interface supports xDSL/ xDSL2, and a downlink interface supports Gigabit Ethernet/Fast Ethernet (GE/FE), a Wireless Local Area Network (WLAN), Plain Old Telephone Service (POTS), a Universal Serial Bus (USB) and the like.
Furthermore, a structure of the power supply adapter may include: an AC-DC conversion circuit and a first xDSL separator;
correspondingly, the step that the power supply adapter mixes the xDSL signal and the DC includes that: the AC-DC conversion circuit converts input AC into DC, and transfers the DC to the first xDSL separator, and the first xDSL separator mixes the DC and an input xDSL signal, which is equivalent to superimposition of the xDSL signal to the DC;
here, a mixed signal is an xDSL+DC signal, and is output through a signal output port of the power supply adapter; the input xDSL signal is an xDSL signal which is input through a signal input port of the power supply adapter and passes through a blocking capacitor; and the signal input port and signal output port of the power supply adapter may be RJ11 ports; and
the step that the first xDSL separator mixes the DC and the input xDSL signal includes that: a filter circuit in the first xDSL separator filters a noise signal and high-frequency signal in the DC, and directly mixes the DC in which the noise signal and high-frequency signal are filtered and the input xDSL signal.

Furthermore, the power supply adapter further includes a PSE control circuit;
correspondingly, after the step that the first xDSL separator mixes the DC and the input xDSL signal, the method further includes that: the PSE control circuit detects whether there exists a PD, and determines whether to supply power to the PD according to a detection result; when the PD is detected, that is, xDSL central office equipment is consistent with a POE standard, it is necessary to supply power to the xDSL central office equipment, and the mixed signal is controlled to be output to the xDSL central office equipment; when no PD is detected, that is, the xDSL central office equipment is inconsistent with the POE standard, the mixed signal is forbidden to be output; here, it is important to note that it may be considered that the DC has been mixed with the input xDSL signal after the power supply adapter is powered on and the PSE control circuit may detect whether there exists the PD after power gets stable, so that the DC has been mixed with the input xDSL signal when the PSE control circuit detects whether there exists the PD; and
the step that the PSE control circuit detects whether there exists the PD includes that: the PSE control circuit detects whether characteristic resistance of a PD detection circuit in the xDSL central office equipment is within a set resistance range, for example, whether it is between 23.75kΩ and 26.25kΩ, and whether capacitance is within a set capacitance range, for example, whether it is between 0.05uF and 0.12uF, determines that there exists the PD when judgment conditions of the resistance and the capacitance are met, and determines that there exists no PD when the judgment conditions of the resistance and the capacitance are not met.

Furthermore, another structure of the power supply adapter may include: an AC-DC conversion circuit and a first filter circuit;
correspondingly, the step that the power supply adapter mixes the xDSL signal and the DC includes that: the AC-DC conversion circuit converts input AC into DC, and transfers the DC to the first filter circuit, and the first filter circuit mixes the DC and an input xDSL signal;
here, the mixed signal is an xDSL+DC signal, and is output through a signal output port of the power supply adapter; the input xDSL signal is an xDSL signal which is input through a signal input port of the power supply adapter and passes through a blocking capacitor; and the signal input port and signal output port of the power supply adapter may be RJ11 ports; and
the step that the first filter circuit mixes the DC and the input xDSL signal includes that: the first filter circuit filters a noise signal and high-frequency signal in the DC, and directly mixes the DC in which the noise signal and high-frequency signal are filtered and the input xDSL signal.

Furthermore, the power supply adapter may further include a PSE control circuit, connected with the first filter circuit;
correspondingly, after the step that the first filter circuit mixes the DC and the input xDSL signal, the method further includes that: the PSE control circuit detects whether there exists a PD, and determines whether to supply power to the PD according to a detection result; when the PD is detected, that is, the xDSL central office equipment is consistent with the POE standard, it is necessary to supply power to the xDSL central office equipment, and the mixed signal is controlled to be output to the xDSL central office equipment; when no PD is detected, that is, the xDSL central office equipment is inconsistent with the POE standard, the mixed signal is forbidden to be output; and
the step that the PSE control circuit detects whether there exists the PD includes that: the PSE control circuit detects whether characteristic resistance of a resistance-capacitance detection circuit in the xDSL central office equipment is within a set resistance range, for example, whether it is between 23.75kΩ and 26.25kΩ, and whether capacitance is within a set capacitance range, for example, whether it is between 0.05uF and 0.12uF, determines that there exists the PD when judgment conditions of the resistance and the capacitance are met, and determines that there exists no PD when the judgment conditions of the resistance and the capacitance are not met.

Furthermore, the AC-DC conversion circuit in the embodiment of the disclosure may convert a 220V AC voltage into a 40V∼60V DC voltage, the 220V AC voltage is converted into a 57V AC voltage in the embodiment, and the AC-DC conversion circuit includes: a common mode inductor, a bridge rectifier, a transformer, an AC-DC control chip, a filter inductor, a filter capacitor and the like, herein the common mode inductor may be a 35mH common mode inductor, the bridge rectifier may be MB6S, the transformer may be RD246-7, the AC-DC control chip may be THX201 and the filter inductor may be a 3uH inductor;
the first xDSL separator includes: a differential mode inductor and a capacitor, herein the differential mode inductor may be an 8mH, 2mH and 0.7mH differential mode inductor, and the capacitor may be a 400V/0.047uF capacitor;
the blocking capacitor may be a 400V/0.022uF capacitor;
the first filter circuit includes: a differential mode inductor and a filter capacitor, herein the differential mode inductor may be an 8mH differential mode inductor, and the capacitor may be a 400V/0.047uF filter capacitor; and
the PSE control circuit mainly includes a PSE control chip and a Transient Voltage Suppressor (TVS) protector, herein the PSE control chip may adopt MAX5971.

Step 102: the power supply adapter transmits the mixed signal to the xDSL central office equipment through a subscriber line;
here, the xDSL central office equipment may be a Digital Subscriber Line Access Multiplexer (DSLAM), accesses a backbone network in an uplink direction, and accesses xDSL terminal equipment in a downlink direction; the subscriber line is a copper-core twisted pair, and a line diameter may be 0.4mm or 0.5mm;
after the step that the power supply adapter transmits the mixed signal to the xDSL central office equipment through the subscriber line, the method further includes that: the xDSL central office equipment separates the mixed signal to acquire DC required by the xDSL central office equipment;
here, when the power supply adapter includes the AC-DC conversion circuit, the PSE control circuit and the first xDSL separator, the xDSL central office equipment correspondingly includes a second xDSL separator, the PD detection circuit and a DC-DC conversion circuit;
the step that the xDSL central office equipment separates the mixed signal to acquire the DC required by the xDSL central office equipment includes that: the second xDSL separator separates the input mixed signal to acquire the xDSL signal and the DC, and transfers the DC to the DC-DC conversion circuit, and the DC-DC conversion circuit converts the DC into the DC required by the xDSL central office equipment; the input mixed signal is a mixed signal input through a signal input port of the xDSL central office equipment; and the signal input port of the xDSL central office equipment may be RJ11,
herein, the step that the second xDSL separator separates the input mixed signal includes that: the high-frequency xDSL signal and low-frequency DC in the input mixed signal are separated to acquire the xDSL signal and the DC by a filter circuit in the second xDSL separator; and here, a frequency of the DC is far lower than a frequency of the xDSL signal, so that the xDSL signal is a high-frequency signal relative to the DC.

Furthermore, after the step that the xDSL signal and the DC are required, the method further includes that: the second xDSL separator transmits the xDSL signal to an xDSL signal processing circuit in the xDSL central office equipment, and the xDSL signal processing circuit processes xDSL service data.

Furthermore, when the power supply adapter includes the AC-DC conversion circuit and the first filter circuit, the xDSL central office equipment correspondingly includes a second filter circuit and a DC-DC conversion circuit;
the step that the xDSL central office equipment separates the mixed signal to acquire the DC required by the xDSL central office equipment includes that: the second filter circuit separates the input mixed signal to acquire the xDSL signal and the DC, and transfers the DC to the DC-DC conversion circuit; the DC-DC conversion circuit converts the DC into the DC required by the xDSL central office equipment; the input mixed signal is a mixed signal input through the signal input port of the xDSL central office equipment; and the signal input port of the xDSL central office equipment may be RJ11; and
here, the step that the second filter circuit separates the input mixed signal includes that: the high-frequency xDSL signal and low-frequency DC in the input mixed signal are separated to acquire the xDSL signal and the DC by the second filter circuit.

Furthermore, after the step that the xDSL signal and the DC are acquired, the method further includes that: the second filter circuit transmits the xDSL signal to the xDSL signal processing circuit in the xDSL central office equipment, and the xDSL signal processing circuit processes xDSL service data.

Furthermore, when the power supply adapter further includes the PSE detection circuit, the xDSL central office equipment correspondingly further includes the resistance-capacitance detection circuit.

Furthermore, the second xDSL separator in the embodiment of the disclosure may include: a differential mode inductor and a capacitor, herein the differential mode inductor may be an 8mH, 2mH and 0.7mH differential mode inductor, and the capacitor may be a 400V/0.047uF capacitor;
the second filter circuit may include: a differential mode inductor and a filter capacitor, herein the differential mode inductor may be an 8mH differential mode inductor, and the capacitor may be a 400V/0.047uF filter capacitor;
the PD detection circuit includes a PD chip and a characteristic resistor, herein the PD chip may be MAX5969, and the characteristic resistor may be a 24.9kΩ resistor;
the DC-DC conversion circuit mainly includes a DC-DC control chip and a transformer, herein the DC-DC control chip may adopt ISL6722, and the transformer may adopt PA2649; the DC-DC conversion circuit in the embodiment of the disclosure may convert 40V∼60V DC into 12V/3.3V/1.8V/1.2V DC required by the xDSL central office equipment;
the resistance-capacitance detection circuit mainly includes a characteristic resistor and a characteristic capacitor, herein the characteristic resistor may be a 24.9kΩ resistor, and the characteristic capacitor may be a 100V/0.1uF capacitor; and
the xDSL signal processing circuit mainly includes an xDSL chipset.

Fig. 2 is a flowchart of a reverse power supply method according to embodiment 2 of the disclosure, and in the embodiment, an xDSL signal is a VDSL signal, and xDSL central office equipment is VDSL central office equipment; and as shown in Fig. 2, a flow of the reverse power supply method of the embodiment includes the following steps.

Step 201: VDSL terminal equipment transmits a VDSL signal to a power supply adapter;
here, the step that the VDSL terminal equipment transmits the VDSL signal to the power supply adapter is specifically implemented as follows: the VDSL terminal equipment transmits the VDSL signal to the power supply adapter through a VDSL link;
the VDSL signal is configured to transmit service data; and the VDSL terminal equipment may be a modem, an uplink interface supports VDSL/VDSL2, and a downlink interface supports GE/FE, a WLAN, POTS, a USB and the like.

Step 202: the power supply adapter mixes the VDSL signal and DC;
here, the power supply adapter in the embodiment of the disclosure includes: an AC-DC conversion circuit, a PSE control circuit and a first VDSL separator;
the step specifically includes that: the AC-DC conversion circuit of the power supply adapter converts input AC into DC, and transfers the DC to the first VDSL separator, and the first VDSL separator mixes the DC and an input VDSL signal, which is equivalent to superimposition of the VDSL signal to the DC;
here, a mixed signal is a VDSL+DC signal, and is output through a signal output port of the power supply adapter; the input VDSL signal is a VDSL signal which is input through a signal input port of the power supply adapter and passes through a blocking capacitor; and the signal input port and signal output port of the power supply adapter may be RJ11 ports; and
the step that the first VDSL separator mixes the DC and the input VDSL signal includes that: a filter circuit in the first VDSL separator filters a noise signal and high-frequency signal in the DC, and directly mixes the DC in which the noise signal and high-frequency signal are filtered and the input VDSL signal.

The AC-DC conversion circuit in the embodiment of the disclosure may convert a 220V AC voltage into a 40V∼60V DC voltage, the 220V AC voltage is converted into a 57V AC voltage in the embodiment, and the AC-DC conversion circuit includes: a common mode inductor, a bridge rectifier, a transformer, an AC-DC control chip, a filter inductor, a filter capacitor and the like, herein the common mode inductor may be a 35mH common mode inductor, the bridge rectifier may be MB6S, the transformer may be RD246-7, the AC-DC control chip may be THX201 and the filter inductor may be a 3uH inductor;
the first VDSL separator includes: a differential mode inductor and a capacitor, herein the differential mode inductor may be an 8mH, 2mH and 0.7mH differential mode inductor, and the capacitor may be a 400V/0.047uF capacitor; the first VDSL separator is required to allow at least a 350mA current to pass through; and
the blocking capacitor is a 400V/0.022uF capacitor.

Step 203: the power supply adapter detects resistance and capacitance of a PD detection circuit in the VDSL central office equipment to determine whether there exists a PD, Step 204 is executed if YES, and Step 206 is executed if NO;
the step specifically includes that: the PSE control circuit in the power supply adapter detects whether characteristic resistance of the PD detection circuit in the VDSL central office equipment is within a set resistance range, for example, whether it is between 23.75kΩ and 26.25kΩ, and whether capacitance is within a set capacitance range, for example, whether it is between 0.05uF and 0.12uF, determines that there exists the PD, that is, the VDSL central office equipment is a PD consistent with a POE standard, when judgment conditions of the resistance and the capacitance are met, and when the judgment conditions of the resistance and the capacitance are not met, determines that the VDSL central office equipment is a PD inconsistent with the POE standard, and determines whether to supply power to the PD according to a detection result;
the PSE control circuit mainly includes a PSE control chip and a TVS protector, herein the PSE control chip adopts MAX5971; and
the PD detection circuit includes a PD chip and a characteristic resistor, herein the PD chip may be MAX5969, and the characteristic resistor may be a 24.9kΩ resistor.

Step 204: the power supply adapter controls the mixed signal to be transmitted to the VDSL central office equipment through a subscriber line;
here, the subscriber line is a copper-core twisted pair, a line diameter may be 0.4mm or 0.5mm, and a length of the subscriber line does not exceed 100 meters; and
the VDSL central office equipment may be a DSLAM, accesses a backbone network in an uplink direction, and accesses xDSL terminal equipment in a downlink direction.

Step 205: the VDSL central office equipment separates the mixed signal to acquire DC required by the VDSL central office equipment, and processes VDSL service data according to the VDSL signal;
here, the VDSL central office equipment includes a second VDSL separator, the PD detection circuit and a DC-DC conversion circuit;
the step that the VDSL central office equipment separates the mixed signal to acquire the DC required by the VDSL central office equipment includes that: the second VDSL separator of the VDSL central office equipment separates the input mixed signal to acquire the VDSL signal and the DC, and transfers the DC to the DC-DC conversion circuit, and the DC-DC conversion circuit converts the DC into the DC required by the VDSL central office equipment; here, the 57V DC is converted into the 12V/3.3V/1.8V/1.2V DC required by the VDSL central office equipment; the input mixed signal is a mixed signal input through a signal input port of the VDSL central office equipment; the signal input port of the VDSL central office equipment may be RJ11,
herein the step that the second VDSL separator separates the input mixed signal includes that: the high-frequency VDSL signal and low-frequency DC in the input mixed signal are separated to acquire the VDSL signal and the DC by a filter circuit in the second VDSL separator; here, a frequency of the VDSL signal is usually between 500KHz and 30MHz, while a frequency of the DC is far lower than the frequency of the VDSL signal, so that the VDSL signal is a high-frequency signal relative to the DC;
the step that the VDSL central office equipment processes the VDSL service data according to the VDSL signal is specifically implemented as follows: a VDSL signal circuit in the VDSL central office equipment processes the VDSL service data according to the VDSL signal; here, the VDSL signal circuit mainly includes a VDSL chipset; and
the second VDSL separator includes: a differential mode inductor and a capacitor, herein the differential mode inductor may be an 8mH, 2mH and 0.7mH differential mode inductor, and the capacitor may be a 400V/0.047uF capacitor; and the second VDSL separator is required to allow at least a 350mA current to pass through.

The DC-DC conversion circuit mainly includes a DC-DC control chip and a transformer, herein the DC-DC control chip may adopt ISL6722, and the transformer may adopt PA2649; and the DC-DC conversion circuit in the embodiment of the disclosure may convert the 40V∼60V DC into the 12V/3.3V/1.8V/1.2V DC required by the VDSL central office equipment.

Step 206: the processing flow is ended.

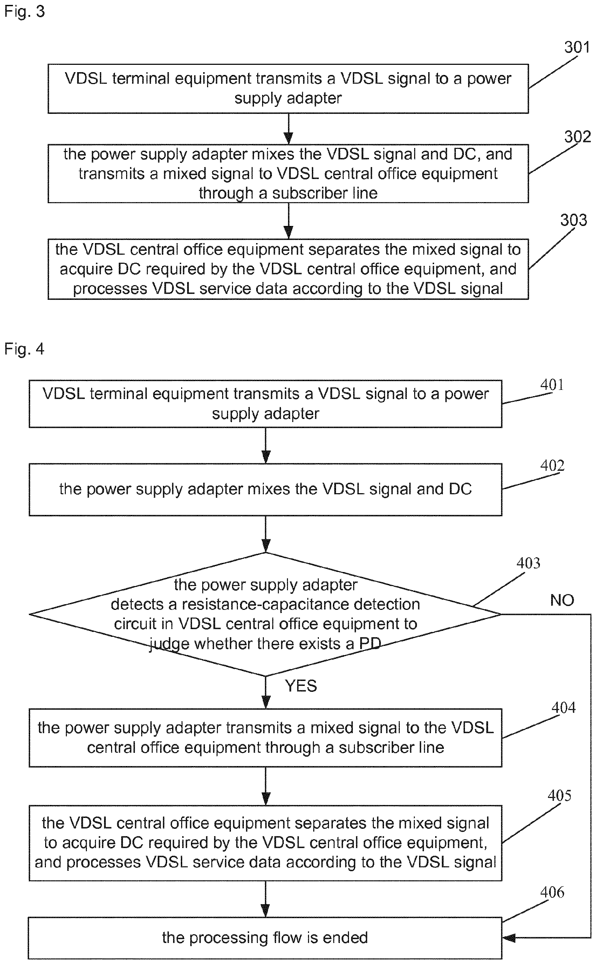

Fig. 3 is a flowchart of a reverse power supply method according to embodiment 3 of the disclosure, and in the embodiment, an xDSL signal is a VDSL signal, and xDSL central office equipment is VDSL central office equipment; and as shown in Fig. 3, a flow of the reverse power supply method of the embodiment includes the following steps.

Step 301: VDSL terminal equipment transmits a VDSL signal to a power supply adapter;
here, the VDSL terminal equipment transmits the VDSL signal to the power supply adapter through a VDSL link;
the VDSL signal is configured to transmit service data; and the VDSL terminal equipment may be a modem, an uplink interface supports VDSL/VDSL2, and a downlink interface supports GE/FE, a WLAN, POTS, a USB and the like.

Step 302: the power supply adapter mixes the VDSL signal and DC, and transmits a mixed signal to VDSL central office equipment through a subscriber line;
here, the VDSL central office equipment may be a DSLAM, accesses a backbone network in an uplink direction, and accesses xDSL terminal equipment in a downlink direction;
the power supply adapter in the embodiment of the disclosure includes: an AC-DC conversion circuit and a first filter circuit;
the step that the power supply adapter mixes the VDSL signal and the DC includes that: the AC-DC conversion circuit of the power supply adapter converts input AC into DC, and transfers the DC to the first filter circuit; the first filter circuit mixes the DC and an input VDSL signal; here, the mixed signal is a VDSL+DC signal, and is output through a signal output port of the power supply adapter; the input VDSL signal is a VDSL signal which is input through a signal input port of the power supply adapter and passes through a blocking capacitor; and the signal input port and signal output port of the power supply adapter may be RJ11 ports,
herein the step that the first filter circuit mixes the DC and the input VDSL signal includes that: a first filter circuit filters a noise signal and high-frequency signal in the DC, and mixes the DC in which the noise signal and high-frequency signal are filtered and the input VDSL signal;
the AC-DC conversion circuit in the embodiment of the disclosure may convert a 220V AC voltage into a 40V∼60V DC voltage; the AC-DC conversion circuit includes: a common mode inductor, a bridge rectifier, a transformer, an AC-DC control chip, a filter inductor, a filter capacitor and the like, herein the common mode inductor may be a 35mH common mode inductor, the bridge rectifier may be MB6S, the transformer may be RD246-7, the AC-DC control chip may be THX201 and the filter inductor may be a 3uH inductor;
the first filter circuit includes: a differential mode inductor and a capacitor, herein the differential mode inductor may be an 8mH differential mode inductor, and the capacitor may be a 400V/0.047uF capacitor;
the blocking capacitor may be a 400V/0.022uF capacitor;
the subscriber line is a copper-core twisted pair, and a line diameter may be 0.4mm or 0.5mm; and a length of the subscriber line may maximally reach 300 meters.

Step 303: the VDSL central office equipment separates the mixed signal to acquire DC required by the VDSL central office equipment, and processes VDSL service data according to the VDSL signal;
here, the VDSL central office equipment includes a second filter circuit and a DC-DC conversion circuit;
the step that the VDSL central office equipment separates the mixed signal to acquire the DC required by the VDSL central office equipment includes that: the second filter circuit of the VDSL central office equipment separates the input mixed signal to acquire the VDSL signal and the DC, and transfers the DC to the DC-DC conversion circuit; the DC-DC conversion circuit converts the DC into the DC required by the VDSL central office equipment; here, the input mixed signal is a mixed signal input through the signal input port of the VDSL central office equipment; 57V DC is converted into 12V/3.3V/1.8V/1.2V DC required by the VDSL central office equipment in the embodiment of the disclosure; the signal input port of the VDSL central office equipment may be RJ11;
the second filter circuit includes: a differential mode inductor and a filter capacitor, herein the differential mode inductor may be an 8mH differential mode inductor, and the capacitor may be a 400V/0.047uF filter capacitor;
the DC-DC conversion circuit mainly includes a DC-DC control chip and a transformer, herein the DC-DC control chip may adopt ISL6722, and the transformer may adopt PA2649; and the DC-DC conversion circuit in the embodiment of the disclosure may convert the 40V∼60V DC into the 12V/3.3V/1.8V/1.2V DC required by the VDSL central office equipment.

The step that the VDSL central office equipment processes the VDSL service data according to the VDSL signal is specifically implemented as follows: a VDSL signal circuit in the VDSL central office equipment processes the VDSL service data according to the VDSL signal; and here, the VDSL signal circuit mainly includes a VDSL chipset.

Fig. 4 is a flowchart of a reverse power supply method according to embodiment 4 of the disclosure, and in the embodiment, an xDSL signal is a VDSL signal, and xDSL central office equipment is VDSL central office equipment; and as shown in Fig. 4, a flow of the reverse power supply method of the embodiment includes the following steps.

Step 401: VDSL terminal equipment transmits a VDSL signal to a power supply adapter;
here, the VDSL terminal equipment transmits the VDSL signal to the power supply adapter through a VDSL link;
the VDSL signal is configured to transmit service data; and the VDSL terminal equipment may be a modem, an uplink interface supports VDSL/VDSL2, and a downlink interface supports GE/FE, a WLAN, POTS, a USB and the like.

Step 402: the power supply adapter mixes the VDSL signal and DC;
here, the power supply adapter in the embodiment of the disclosure includes: an AC-DC conversion circuit, a PSE control circuit and a first filter circuit;
the step specifically includes that: the AC-DC conversion circuit of the power supply adapter converts input AC into DC, and transfers the DC to the first filter circuit, and the first filter circuit mixes the DC and an input VDSL signal, which is equivalent to superimposition of the VDSL signal to the DC; here, a mixed signal is a VDSL+DC signal, and is output through a signal output port of the power supply adapter; the input VDSL signal is a VDSL signal which is input through a signal input port of the power supply adapter and passes through a blocking capacitor; and the signal input port and signal output port of the power supply adapter may be RJ11 ports;
the AC-DC conversion circuit in the embodiment of the disclosure may convert a 220V AC voltage into a 40V∼60V DC voltage; the AC-DC conversion circuit includes: a common mode inductor, a bridge rectifier, a transformer, an AC-DC control chip, a filter inductor, a filter capacitor and the like, herein the common mode inductor may be a 35mH common mode inductor, the bridge rectifier may be MB6S, the transformer may be RD246-7, the AC-DC control chip may be THX201 and the filter inductor may be a 3uH inductor;
the blocking capacitor is a 400V/0.022uF capacitor; and
the first filter circuit includes: a differential mode inductor and a capacitor, herein the differential mode inductor may be an 8mH differential mode inductor, and the capacitor may be a 400V/0.047uF filter capacitor.

Step 403: the power supply adapter detects a resistance-capacitance detection circuit in the VDSL central office equipment to determine whether there exists a PD, Step 404 is executed if YES, and Step 406 is executed if NO;
the step specifically includes that: the PSE control circuit in the power supply adapter detects whether characteristic resistance of the resistance-capacitance detection circuit in the VDSL central office equipment is within a set resistance range, for example, whether it is between 23.75kΩ and 26.25kΩ, and whether capacitance is within a set capacitance range, for example, whether it is between 0.05uF and 0.12uF, determines that there exists the PD, that is, the VDSL central office equipment is a PD consistent with a POE standard, when judgment conditions of the resistance and the capacitance are met, and when the judgment conditions of the resistance and the capacitance are not met, determines that the VDSL central office equipment is a PD inconsistent with the POE standard, and determines whether to supply power to the PD according to a detection result;
the PSE control circuit mainly includes a PSE control chip and a TVS protector, herein the PSE control chip adopts MAX5971; and
the resistance-capacitance detection circuit mainly includes a characteristic resistor and a characteristic capacitor, herein the characteristic resistor may be a 24.9kΩ resistor, and the characteristic capacitor may be a 100V/0.1uF capacitor.

Step 404: the power supply adapter controls the mixed signal to be transmitted to the VDSL central office equipment through a subscriber line;
here, the subscriber line is a copper-core twisted pair, a line diameter may be 0.4mm or 0.5mm, and a length of the subscriber line may maximally reach 300 meters; and
the VDSL central office equipment may be a DSLAM, accesses a backbone network in an uplink direction, and accesses xDSL terminal equipment in a downlink direction.

Step 405: the VDSL central office equipment separates the mixed signal to acquire DC required by the VDSL central office equipment, and processes VDSL service data according to the VDSL signal;
here, the VDSL central office equipment includes a second filter circuit, the resistance-capacitance detection circuit and a DC-DC conversion circuit;
the step that the VDSL central office equipment separates the mixed signal to acquire the DC required by the VDSL central office equipment includes that: the second filter circuit of the VDSL central office equipment separates the input mixed signal to acquire the VDSL signal and the DC, and transfers the DC to the DC-DC conversion circuit, and the DC-DC conversion circuit converts the DC into the DC required by the VDSL central office equipment; here, 57V DC is converted into 12V/3.3V/1.8V/1.2V DC required by the VDSL central office equipment; the input mixed signal is a mixed signal input through a signal input port of the VDSL central office equipment; the signal input port of the VDSL central office equipment may be RJ11,
herein the step that the second filter circuit separates the input mixed signal includes that: the high-frequency VDSL signal and low-frequency DC in the input mixed signal are separated to acquire the VDSL signal and the DC by the second filter circuit; here, a frequency of the VDSL signal is usually between 500KHz and 30MHz, while a frequency of the DC is far lower than the frequency of the VDSL signal, so that the VDSL signal is a high-frequency signal relative to the DC;
the step that the VDSL central office equipment processes the VDSL service data according to the VDSL signal is specifically implemented as follows: a VDSL signal circuit in the VDSL central office equipment processes the VDSL service data according to the VDSL signal; here, the VDSL signal circuit mainly includes a VDSL chipset; and
the second filter circuit includes: a differential mode inductor and a capacitor, herein the differential mode inductor may be an 8mH differential mode inductor, and the capacitor may be a 400V/0.047uF filter capacitor.

The DC-DC conversion circuit mainly includes a DC-DC control chip and a transformer, herein the DC-DC control chip may adopt ISL6722, and the transformer may adopt PA2649; and the DC-DC conversion circuit in the embodiment of the disclosure may convert 40V∼60V DC into the 12V/3.3V/1.8V/1.2V DC required by the VDSL central office equipment.

Step 406: the processing flow is ended.

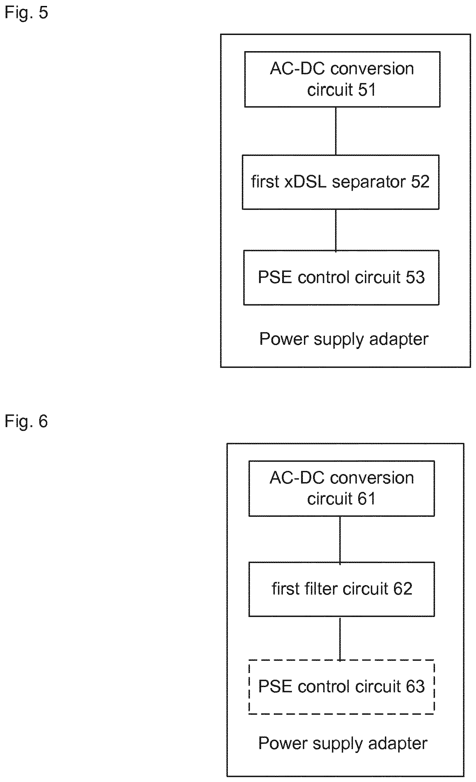

Fig. 5 is a structure diagram of a power supply adapter according to embodiment 1 of the disclosure; and as shown in Fig. 5, a structure of the power supply adapter of the embodiment of the disclosure includes: an AC-DC conversion circuit 51 and a first xDSL separator 52, in whch:
the AC-DC conversion circuit 51 is configured to convert input AC into DC, and transfer the DC to the first xDSL separator 52;
the first xDSL separator 52 is configured to mix the DC and an input xDSL signal;
here, the operation that the first xDSL separator 52 mixes the DC and the input xDSL signal includes that: a filter circuit in the first xDSL separator 52 filters a noise signal and high-frequency signal in teh DC, and mixes the DC in which the noise signal and high-frequency signal are filtered and an input xDSL signal, herein a mixed signal is an xDSL+DC signal, and is output through a signal output port of the power supply adapter; the input xDSL signal is an xDSL signal which is input through a signal input port of the power supply adapter and passes through a blocking capacitor; and the signal input port and signal output port of the power supply adapter may be RJ11 ports, herein the xDSL signal may be: an ADSL signal, an RADSL signal, a VDSL signal, an SDSL signal, an HDSL signal or the like, and the xDSL signal is preferably a VDSL signal.

Furthermore, the power supply adapter further includes a PSE control circuit 53, connected with the first xDSL separator 52 and configured to detect whether there exists a PD and determine whether to supply power to the PD according to a detection result;
the operation that the PSE control circuit 53 detects whether there exists the PD includes that: the PSE control circuit detects whether resistance of a PD detection circuit in the xDSL central office equipment is within a set resistance range, for example, whether it is between 23.75kΩ and 26.25kΩ, and whether capacitance is within a set capacitance range, for example, whether it is between 0.05uF and 0.12uF, determines that there exists the PD when judgment conditions of the resistance and the capacitance are met, and determines that there exists no PD when the judgment conditions of the resistance and the capacitance are not met.

Furthermore, when the xDSL signal in the embodiment is a VDSL signal, the AC-DC conversion circuit 51 converts a 22V AC voltage into a 40V∼60V DC voltage, and the AC-DC conversion circuit may include: a common mode inductor, a bridge rectifier, a transformer, an AC-DC control chip, a filter inductor, a filter capacitor and the like, herein the common mode inductor may be a 35mH common mode inductor, the bridge rectifier may be MB6S, the transformer may be RD246-7, the AC-DC control chip may be THX201 and the filter inductor may be a 3uH inductor;
the first xDSL separator 52 may include: a differential mode inductor and a capacitor, herein the differential mode inductor may be an 8mH, 2mH and 0.7mH differential mode inductor, and the capacitor may be a 400V/0.047uF capacitor; the first xDSL separator is required to allow at least a 350mA current to pass through;
the blocking capacitor may be a 400V/0.022uF capacitor; and
the PSE control circuit 53 mainly includes a PSE control chip and a TVS protector, herein the PSE control chip may adopt MAX5971.

Fig. 6 is a structure diagram of a power supply adapter according to embodiment 2 of the disclosure; and as shown in Fig. 6, a structure of the power supply adapter of the embodiment of the disclosure includes: an AC-DC conversion circuit 61 and a first filter circuit 62, in which:
the AC-DC conversion circuit 61 is configured to convert input AC into DC, and transfer the DC to the first filter circuit 62;
the first filter circuit 62 is configured to mix the DC and an input xDSL signal;
here, a mixed signal is an xDSL+DC signal, and is output through a signal output port of the power supply adapter; the input xDSL signal is an xDSL signal which is input through a signal input port of the power supply adapter and passes through a blocking capacitor; the signal input port of the power supply adapter and the signal output port of the power supply adapter may both be RJ11 ports, herein the xDSL signal may be: an ADSL signal, an RADSL signal, a VDSL signal, an SDSL signal, an HDSL signal, a G.fast signal and the like, and the xDSL signal is preferably a VDSL signal; and
the operation that the first filter circuit 62 mixes the DC and the input xDSL signal includes that: the first filter circuit 62 filters a noise signal and high-frequency signal in the DC, and mixes the DC in which the noise signal and high-frequency signal are filtered and the input xDSL signal.

Furthermore, the power supply adapter may further include a PSE control circuit 63, connected with the first filter circuit 62 and configured to detect whether there exists a PD and determine whether to supply power to the PD according to a detection result; when the PD is detected, that is, xDSL central office equipment is consistent with a POE standard, it is necessary to supply power to the xDSL central office equipment, and the mixed signal is controlled to be output to the xDSL central office equipment; when no PD is detected, that is, the xDSL central office equipment is inconsistent with the POE standard, the mixed signal is forbidden to be output;
here, the operation that the PSE control circuit 63 detects whether there exists the PD includes that: the PSE control circuit 63 detects whether characteristic resistance of a resistance-capacitance detection circuit in the xDSL central office equipment is within a set resistance range, for example, whether it is between 23.75kΩ and 26.25kΩ, and whether capacitance is within a set capacitance range, for example, whether it is between 0.05uF and 0.12uF, determines that there exists the PD when judgment conditions of the resistance and the capacitance are met, and determines that there exists no PD when the judgment conditions of the resistance and the capacitance are not met.

Furthermore, when the xDSL signal in all of the embodiments of the disclosure is a VDSL signal, the AC-DC conversion circuit 61 converts a 22V AC voltage into a 40V∼60V DC voltage, the 22V AC voltage is converted into a 57V DC voltage in the embodiment, and the AC-DC conversion circuit includes: a common mode inductor, a bridge rectifier, a transformer, an AC-DC control chip, a filter inductor, a filter capacitor and the like, herein the common mode inductor may be a 35mH common mode inductor, the bridge rectifier may be MB6S, the transformer may be RD246-7, the AC-DC control chip may be THX201 and the filter inductor may be a 3uH inductor;
the blocking capacitor may be a 400V/0.022uF capacitor;
the first filter circuit 62 may include: a differential mode inductor and a capacitor, herein the differential mode inductor may be an 8mH differential mode inductor, and the capacitor may be a 400V/0.047uF capacitor; and
the PSE control circuit 63 mainly includes a PSE control chip and a TVS protector, herein the PSE control chip may adopt MAX5971.

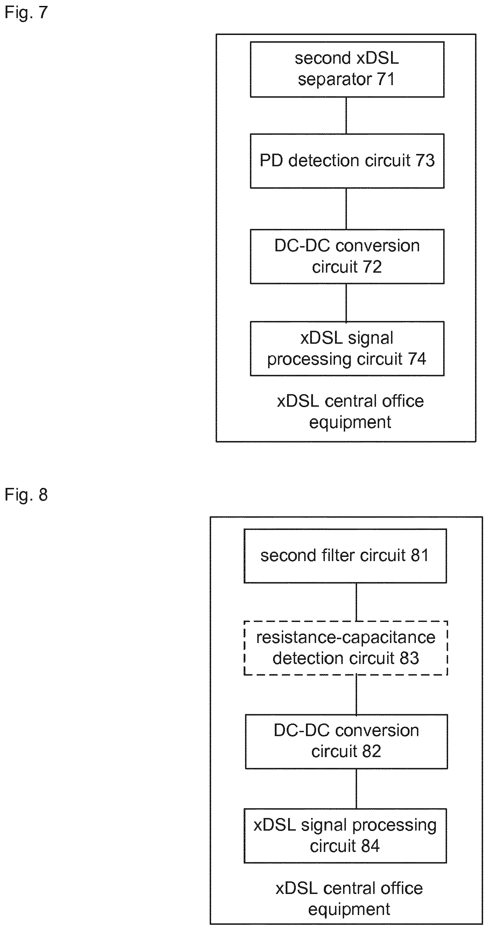

Fig. 7 is a structure diagram of xDSL central office equipment according to embodiment 1 of the disclosure; and as shown in Fig. 7, a structure of the xDSL central office equipment of the embodiment of the disclosure includes: a second xDSL separator 71 and a DC-DC conversion circuit 72, in which:
the second xDSL separator 71 is configured to separate a mixed signal to acquire an xDSL signal and DC, and transfer the DC to the DC-DC conversion circuit;
the DC-DC conversion circuit 72 is configured to convert the DC into DC required by the xDSL central office equipment,
herein the mixed signal is a signal mixed from the xDSL signal and the DC and transmitted to the xDSL central office equipment through a subscriber line by a power supply adapter;
here, the mixed signal may be: an ADSL signal, an RADSL signal, a VDSL signal, an SDSL signal, an HDSL signal, a G.fast signal and the like, and the xDSL signal is preferably a VDSL signal;
the operation that the second xDSL separator 71 separates the mixed signal to acquire the xDSL signal and the DC includes that: the high-frequency xDSL signal and low-frequency DC in the input mixed signal are separated to acquire the xDSL signal and the DC by a filter circuit in the second xDSL separator 71; and here, a frequency of the DC is far lower than a frequency of the xDSL signal, so that the xDSL signal is a high-frequency signal relative to the DC.

Furthermore, the xDSL central office equipment further includes a PD detection circuit 73 and an xDSL signal processing circuit 74, and the PD detection circuit is positioned between the second xDSL separator 71 and the DC-DC conversion circuit 72, in which:
the PD detection circuit 73 is configured to provide detection about whether there exists a PD; and
the xDSL signal processing circuit 74 is configured to process xDSL service data according to the xDSL signal.

Furthermore, the second xDSL separator 71 in the embodiment of the disclosure may include: a differential mode inductor and a capacitor, herein the differential mode inductor may be an 8mH, 2mH and 0.7mH differential mode inductor, and the capacitor may be a 400V/0.047uF capacitor; the second xDSL separator is required to allow at least a 350mH current to pass through;
the DC-DC conversion circuit 72 mainly includes a DC-DC control chip and a transformer, herein the DC-DC control chip may adopt ISL6722, and the transformer may adopt PA2649; the DC-DC conversion circuit in the embodiment of the disclosure may convert 40V∼60V DC into 12V/3.3V/1.8V/1.2V DC required by the xDSL central office equipment;
the PD detection circuit 73 may include a PD chip and a characteristic resistor, herein the PD chip may be MAX5969, and the characteristic resistor may be a 24.9kΩ resistor; and
the xDSL signal processing circuit 74 may include a VDSL chipset.

Fig. 8 is a structure diagram of xDSL central office equipment according to embodiment 2 of the disclosure; and as shown in Fig. 8, a structure of the xDSL central office equipment of the embodiment of the disclosure includes: a second filter circuit 81 and a DC-DC conversion circuit 82, in which:
the second filter circuit 81 is configured to separate a mixed signal to acquire an xDSL signal and DC, and transfer the DC to the DC-DC conversion circuit 82;
the DC-DC conversion circuit 82 is configured to convert the DC into DC required by the xDSL central office equipment,
herein the mixed signal is a signal mixed from the xDSL signal and the DC and transmitted to the xDSL central office equipment through a subscriber line by a power supply adapter;
here, the xDSL signal may be an ADSL signal, an RADSL signal, a VDSL signal, an SDSL signal, an HDSL signal, a G.fast signal and the like, and the xDSL signal is preferably a VDSL signal;
the operation that the second filter circuit 81 separates the mixed signal to acquire the xDSL signal and the DC includes that: the high-frequency xDSL signal and low-frequency DC in the input mixed signal are separated to acquire the xDSL signal and the DC by a filter circuit in the second filter circuit 81; and here, a frequency of the DC is far lower than a frequency of the xDSL signal, so that the xDSL signal is a high-frequency signal relative to the DC.

Furthermore, the xDSL central office equipment further includes a resistance-capacitance detection circuit 83 and an xDSL signal processing circuit 84, and the resistance-capacitance detection circuit 83 is positioned between the second filter circuit 81 and the DC-DC conversion circuit 82, in which:
the resistance-capacitance detection circuit 83 is configured to provide detection about whether there exists a PD; and
the xDSL signal processing circuit 84 is configured to process xDSL service data according to the xDSL signal.

Furthermore, the second filter circuit 81 in the embodiment of the disclosure may include: a differential mode inductor and a capacitor, herein the differential mode inductor may be an 8mH differential mode inductor, and the capacitor may be a 400V/0.047uF filter capacitor;
the DC-DC conversion circuit 82 mainly includes a DC-DC control chip and a transformer, herein the DC-DC control chip may adopt ISL6722, and the transformer may adopt PA2649; the DC-DC conversion circuit in the embodiment of the disclosure may convert 40V∼60V DC into 12V/3.3V/1.8V/1.2V DC required by the xDSL central office equipment;
the resistance-capacitance detection circuit 83 mainly includes a characteristic resistor and a characteristic capacitor, herein the characteristic resistor may be a 24.9kΩ resistor, and the characteristic capacitor may be a 100V/0.1uF capacitor; and
the xDSL signal processing circuit 84 may include a VDSL chipset.

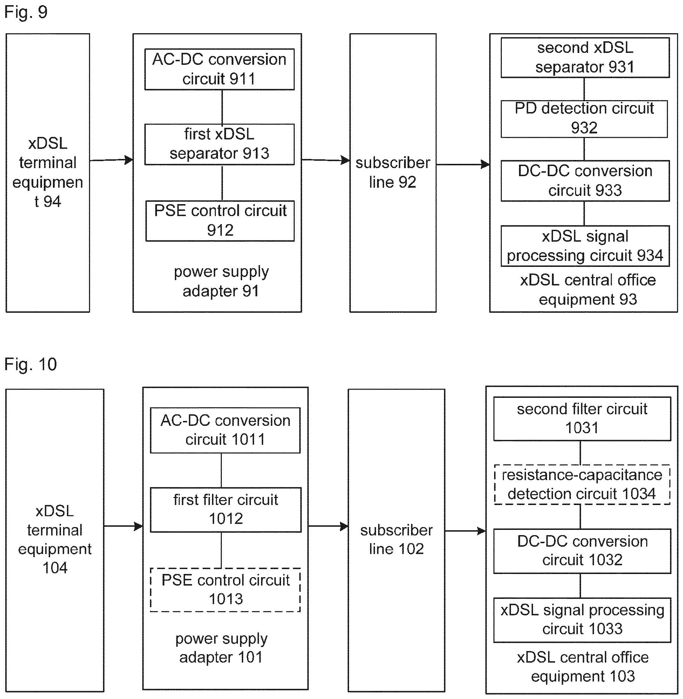

Fig. 9 is a structure diagram of a reverse power supply system according to embodiment 1 of the disclosure; and as shown in Fig. 9, a structure of the reverse power supply system of the embodiment of the disclosure includes: a power supply adapter 91, a subscriber line 92 and xDSL central office equipment 93, in which:
the power supply adapter 91 is configured to mix an xDSL signal and DC, and transmit a mixed signal to the xDSL central office equipment 93 through the subscriber line 92;
the subscriber line 92 is configured to transmit the mixed signal to the xDSL central office equipment 93;
the xDSL central office equipment 93 is configured to separate the mixed signal to acquire DC required by the xDSL central office equipment; and
here, the xDSL signal may be an ADSL signal, an RADSL signal, a VDSL signal, an SDSL signal, an HDSL signal, a G.fast signal and the like, and the xDSL signal is preferably a VDSL signal.

Furthermore, the system further includes xDSL terminal equipment 94, configured to transmit the xDSL signal to the power supply adapter 91 through an xDSL link; the xDSL signal is configured to transmit service data; the xDSL terminal equipment 94 may be a modem, an uplink interface supports VDSL/VDSL2, and a downlink interface supports GE/FE, a WLAN, POTS, a USB and the like; the xDSL central office equipment 93 may be a DSLAM, accesses a backbone network in an uplink direction, and accesses the xDSL terminal equipment in a downlink direction; and the subscriber line 92 is a copper-core twisted pair, a line diameter may be 0.4mm or 0.5mm, and a maximum length of the subscriber line 92 in the embodiment does not exceed 100 meters.

Furthermore, the power supply adapter 91 includes: an AC-DC conversion circuit 911 and a first xDSL separator 912, in which:
the AC-DC conversion circuit 911 is configured to convert input AC into DC, and transfer the DC to the first xDSL separator 912;
the first xDSL separator 912 is configured to mix the DC and an input xDSL signal;
the operation that the power supply adapter 91 mixes the xDSL signal and the DC includes that: the AC-DC conversion circuit 911 converts the input AC into DC, and transfers the DC to the first xDSL separator 912; the first xDSL separator 912 mixes the DC and the input xDSL signal, which is equivalent to superimposition of the xDSL signal to the DC; here, the mixed signal is an xDSL+DC signal, and is output through a signal output port of the power supply adapter 91; the input xDSL signal is an xDSL signal which is input through a signal input port of the power supply adapter 91 and passes through a blocking capacitor; and the signal input port and signal output port of the power supply adapter 91 may be RJ11 ports.

Furthermore, the power supply adapter 91 further includes a PSE control circuit 913, configured to detect whether there exists a PD, determine whether to supply power to the PD according to a detection result, control the mixed signal to be output to the PD when the PD is detected, and forbid the mixed signal to be output when no PD is detected.

The operation that the PSE control circuit 913 detects whether there exists the PD includes that: the PSE control circuit 913 detects whether characteristic resistance of a PD detection circuit in the xDSL central office equipment is within a set resistance range, for example, whether it is between 23.75kΩ and 26.25kΩ, and whether capacitance is within a set capacitance range, for example, whether it is between 0.05uF and 0.12uF, determines that there exists the PD when judgment conditions of the resistance and the capacitance are met, and determines that there exists no PD when the judgment conditions of the resistance and the capacitance are not met.

Furthermore, the AC-DC conversion circuit 911 in the embodiment may convert a 220V AC voltage into a 40V∼60V DC voltage, and the AC-DC conversion circuit 911 may include: a common mode inductor, a bridge rectifier, a transformer, an AC-DC control chip, a filter inductor, a filter capacitor and the like, herein the common mode inductor may be a 35mH common mode inductor, the bridge rectifier may be MB6S, the transformer may be RD246-7, the AC-DC control chip may be THX201 and the filter inductor may be a 3uH inductor;
the first xDSL separator 912 may include: a differential mode inductor and a capacitor, herein the differential mode inductor may be an 8mH, 2mH and 0.7mH differential mode inductor, and the capacitor may be a 400V/0.047uF capacitor;
the blocking capacitor may be a 400V/0.022uF capacitor; and
the PSE control circuit 913 mainly includes a PSE control chip and a TVS protector, herein the PSE control chip may adopt MAX5971.

Furthermore, the xDSL central office equipment 93 includes: a second xDSL separator 931 and a DC-DC conversion circuit 932, in which:
the second xDSL separator 931 is configured to separate the mixed signal to acquire the xDSL signal and the DC;
the DC-DC conversion circuit 932 is configured to convert the DC into DC required by the xDSL central office equipment 93;
the operation that the xDSL central office equipment 93 separates the mixed signal to acquire the DC required by the xDSL central office equipment includes that: the second xDSL separator 931 separates the input mixed signal to acquire the xDSL signal and the DC, and transfers the DC to the DC-DC conversion circuit 932; the DC-DC conversion circuit 932 converts the DC into the DC required by the xDSL central office equipment 93;
furthermore, the xDSL central office equipment 93 further includes the PD detection circuit 933 and an xDSL signal processing circuit 934, in which:
   the PD detection circuit 933 is configured to provide detection about whether there exists a PD; and
   the xDSL signal processing circuit 934 is configured to process the xDSL service data according to the xDSL signal separated from the mixed signal by the second xDSL separator 931.

Furthermore, the second xDSL separator 931 in the embodiment of the disclosure may include: a differential mode inductor and a capacitor, herein the differential mode inductor may be an 8mH, 2mH and 0.7mH differential mode inductor, and the capacitor may be a 400V/0.047uF capacitor;
the DC-DC conversion circuit 932 may include a DC-DC control chip and a transformer, herein the DC-DC control chip may adopt ISL6722, and the transformer may adopt PA2649; the DC-DC conversion circuit in the embodiment of the disclosure may convert 40V∼60V DC into 12V/3.3V/1.8V/1.2V DC required by the xDSL central office equipment; and
the PD detection circuit 933 includes a PD chip and a characteristic resistor, herein the PD chip may be MAX5969, and the characteristic resistor may be a 24.9kΩ resistor.

The xDSL signal processing circuit 934 may include a VDSL chipset.

Fig. 10 is a structure diagram of a reverse power supply system according to embodiment 2 of the disclosure; and as shown in Fig. 10, a structure of the reverse power supply system of the embodiment of the disclosure includes: a power supply adapter 101, a subscriber line 102 and xDSL central office equipment 103, in which:
the power supply adapter 101 is configured to mix an xDSL signal and DC, and transmit a mixed signal to the xDSL central office equipment 103 through the subscriber line 102;
the subscriber line 102 is configured to transmit the mixed signal to the xDSL central office equipment 103;
the xDSL central office equipment 103 is configured to separate the mixed signal to acquire DC required by the xDSL central office equipment; and
here, the xDSL signal may be an ADSL signal, an RADSL signal, a VDSL signal, an SDSL signal, an HDSL signal, a G.fast signal and the like, and the xDSL signal is preferably a VDSL signal.

Furthermore, the system further includes xDSL terminal equipment 104, configured to transmit the xDSL signal to the power supply adapter 101 through an xDSL link; the xDSL signal is configured to transmit service data; the xDSL terminal equipment 104 may be a modem, an uplink interface supports VDSL/VDSL2, and a downlink interface supports GE/FE, a WLAN, POTS, a USB and the like; the xDSL central office equipment 103 may be a DSLAM, accesses a backbone network in an uplink direction, and accesses the xDSL terminal equipment in a downlink direction; and the subscriber line 102 is a copper-core twisted pair, a line diameter may be 0.4mm or 0.5mm, and a length of the subscriber line 92 in the embodiment may maximally reach 300 meters.

Furthermore, the power supply adapter 101 includes: an AC-DC conversion circuit 1011 and a first filter circuit 1012, in which:
the AC-DC conversion circuit 1011 is configured to convert input AC into DC, and transfer the DC to the first filter circuit 1012;
the first filter circuit 1012 is configured to mix the DC and an input xDSL signal;
the operation that the power supply adapter 101 mixes the xDSL signal and the DC includes that: the AC-DC conversion circuit 1011 converts the input AC into DC, and transfers the DC to the first filter circuit 1012; the first filter circuit 1012 mixes the DC and the input xDSL signal; here, the mixed signal is an xDSL+DC signal, and is output through a signal output port of the power supply adapter 101; the input xDSL signal is an xDSL signal which is input through a signal input port of the power supply adapter 101 and passes through a blocking capacitor; and the signal input port and signal output port of the power supply adapter 101 may be RJ11 ports.

Furthermore, the power supply adapter 101 may further include a PSE control circuit 1013, configured to detect whether there exists a PD, determine whether to supply power to the PD according to a detection result, control the mixed signal to be output to the PD when the PD is detected, and forbid the mixed signal to be output when no PD is detected.

The operation that the PSE control circuit 1013 detects whether there exists the PD includes that: the PSE control circuit 1013 detects whether characteristic resistance of a PD detection circuit in the xDSL central office equipment is within a set resistance range, for example, whether it is between 23.75kΩ and 26.25kΩ, and whether capacitance is within a set capacitance range, for example, whether it is between 0.05uF and 0.12uF, determines that there exists the PD when judgment conditions of the resistance and the capacitance are met, and determines that there exists no PD when the judgment conditions of the resistance and the capacitance are not met.

Herein, the AC-DC conversion circuit 1011 may convert a 220V AC voltage into a 40V∼60V DC voltage, and the AC-DC conversion circuit 1011 may include: a common mode inductor, a bridge rectifier, a transformer, an AC-DC control chip, a filter inductor, a filter capacitor and the like, herein the common mode inductor may be a 35mH common mode inductor, the bridge rectifier may be MB6S, the transformer may be RD246-7, the AC-DC control chip may be THX201 and the filter inductor may be a 3uH inductor;
the first filter circuit 1012 includes: a differential mode inductor and a capacitor, herein the differential mode inductor may be an 8mH differential mode inductor, and the capacitor may be a 400V/0.047uF capacitor; and
the PSE control circuit 1013 mainly includes a PSE control chip and a TVS protector, herein the PSE control chip may adopt MAX5971.

Furthermore, the xDSL central office equipment 103 includes: a second filter circuit 1031 and a DC-DC conversion circuit 1032, in which:
the second filter circuit 1031 is configured to separate the mixed signal to acquire the xDSL signal and the DC;
the DC-DC conversion circuit 1032 is configured to convert the DC into DC required by the xDSL central office equipment 93;
the operation that the xDSL central office equipment 103 separates the mixed signal to acquire the DC required by the xDSL central office equipment 103 includes that: the second filter circuit 1031 separates the input mixed signal to acquire the xDSL signal and the DC, and transfers the DC to the DC-DC conversion circuit 1032; the DC-DC conversion circuit 1032 converts the DC into the DC required by the xDSL central office equipment 103.

Furthermore, the xDSL central office equipment 103 further includes an xDSL signal processing circuit 1033, configured to process the xDSL service data according to the xDSL signal separated from the mixed signal by the second xDSL separator 1031.

Furthermore, the xDSL central office equipment 103 may further include a resistance-capacitance detection circuit 1034, positioned between the second filter circuit 1031 and the DC-DC conversion circuit 1032 and configured to provide detection about whether there exists a PD.

Furthermore, the second filter circuit 1031 in the embodiment of the disclosure may include: a differential mode inductor and a capacitor, herein the differential mode inductor may be an 8mH differential mode inductor, and the capacitor may be a 400V/0.047uF filter capacitor;
the DC-DC conversion circuit 1032 may include a DC-DC control chip and a transformer, herein the DC-DC control chip may adopt ISL6722, and the transformer may adopt PA2649; and the DC-DC conversion circuit in the embodiment of the disclosure may convert 40V∼60V DC into 12V/3.3V/1.8V/1.2V DC required by the xDSL central office equipment.

The xDSL signal processing circuit 1033 may include a VDSL chipset; and
the resistance-capacitance detection circuit 1034 mainly includes a characteristic resistor and a characteristic capacitor, herein the characteristic resistor may be a 24.9kΩ resistor, and the characteristic capacitor may be a 100V/0.1uF capacitor.

The embodiment of the disclosure further records a storage medium having stored therein computer programs configured to execute the reverse power supply methods of each of the abovementioned embodiment.

### INDUSTRIAL APPLICABILITY

According to the embodiments of the disclosure, the mixed signal is transmitted to the xDSL central office equipment through the subscriber line. In such a manner, it is possible to provide power from power supply equipment arranged in a house of a user to small-sized xDSL central office equipment arranged in a corridor or outdoors under the condition that xDSL access is adopted for a place where there is no Ethernet cable or it is inconvenient to arrange an Ethernet cable but there is a subscriber line is solved, and power is supplied to the central office equipment arranged outdoors when the user requires communication, and may be cut off when the user does not require communication, so that convenience, power saving, working reliability, control flexibility, low power consumption and high rate are ensured.

The above are only the preferred embodiments of the disclosure and not intended to limit the scope of protection of the disclosure.

## Claims

1. A reverse power supply method, comprising:
mixing, by a power supply adapter, an x Digital Subscriber Line, xDSL, signal and Direct Current, DC (101); and
transmitting, by the power supply adapter, a mixed signal to xDSL central office equipment through a subscriber line (102),
wherein mixing, by the power supply adapter, the xDSL signal and the DC comprises: converting, by an Alternating Current-Direct Current, AC-DC, conversion circuit of the power supply adapter, input AC into DC, and transferring the DC to a first xDSL separator of the power supply adapter, and mixing, by the first xDSL separator, the DC and an input xDSL signal; or
converting, by an AC-DC conversion circuit of the power supply adapter, input AC into DC, and transferring the DC to a first filter circuit of the power supply adapter, and mixing, by the first filter circuit, the DC and an input xDSL signal,
correspondingly, the method further comprises:
after mixing, by the first xDSL separator, the DC and the input xDSL signal, detecting, by a Power Supply Equipment, PSE, control circuit of the power supply adapter, whether there exists a Powered device, PD, and determining whether to supply power to the PD according to a detection result; or
after mixing, by the first filter circuit, the DC and the input xDSL signal, detecting, by a PSE control circuit of the power supply adapter, whether there exists a PD, and determining whether to supply power to the PD according to a detection result,
**characterized in that** detecting, by the PSE control circuit of the power supply adapter, whether there exists a PD comprises: detecting whether characteristic resistance of a PD detection circuit in the xDSL central office equipment is within a set resistance range and whether capacitance is within a set capacitance range; and determining that there exists the PD when judgment conditions of the resistance and the capacitance are met, and determining that there exists no PD when the judgment conditions of the resistance and the capacitance are not met.

2. The method according to claim 1, further comprising: before mixing, by the power supply adapter, the xDSL signal and the DC, receiving, by the power supply adapter, the xDSL signal sent by xDSL terminal equipment.

3. The method according to claim 1, further comprising: after transmitting the mixed signal to the xDSL central office equipment through the subscriber line, separating, by the xDSL central office equipment, the mixed signal to acquire DC required by the xDSL central office equipment.

4. The method according to claim 3, wherein separating, by the xDSL central office equipment, the mixed signal to acquire the DC required by the xDSL central office equipment comprises: separating, by a second xDSL separator of the xDSL central office equipment, the input mixed signal to acquire the xDSL signal and the DC, and transferring the DC to a DC-DC conversion circuit of the xDSL central office equipment, and converting, by the DC-DC conversion circuit, the DC into the DC required by the xDSL central office equipment; or
separating, by a second filter circuit of the xDSL central office equipment, the input mixed signal to acquire the xDSL signal and the DC, and transferring the DC to a DC-DC conversion circuit in the xDSL central office equipment, and converting, by the DC-DC conversion circuit, the DC into the DC required by the xDSL central office equipment.

5. A power supply adapter, comprising: an Alternating Current-Direct Current, AC-DC, conversion circuit (51, 61), and a first x Digital Subscriber Line, xDSL, separator (52) or a first filter circuit (62),
wherein the AC-DC conversion circuit (51, 61) is configured to convert input AC into DC, and transfer the DC to the first xDSL separator (52) or the first filter circuit (62); and
the first xDSL separator (52) or the first filter circuit (62) is configured to mix the DC and an input xDSL signal,
wherein the power supply adapter further comprises:
a Power Supply Equipment, PSE, control circuit (53, 63), configured to detect whether there exists a Powered device, PD, and determine whether to supply power to the PD according to a detection result,
**characterized in that** the PSE control circuit (53, 63) detects whether resistance of a PD detection circuit in the xDSL central office equipment is within a set resistance range and whether capacitance is within a set capacitance range, and determines that there exists the PD when judgment conditions of the resistance and the capacitance are met, and determines that there exists no PD when the judgment conditions of the resistance and the capacitance are not met.

6. x Digital Subscriber Line, xDSL, central office equipment, comprising: a second filter circuit (81), and a Direct Current-Direct Current, DC-DC, conversion circuit (82),
wherein the second filter circuit (81) is configured to separate a received mixed signal to acquire an xDSL signal and DC, and transfer the DC to the DC-DC conversion circuit (82); and
the DC-DC conversion circuit (82) is configured to convert the DC into DC required by the second filter circuit (81),
wherein the mixed signal is a signal mixed from the xDSL signal and the DC and transmitted to the xDSL central office equipment through a subscriber line by a power supply adapter,
**characterized in that** the xDSL central office equipment further comprises a resistance-capacitance detection circuit (83) and an xDSL signal processing circuit (84),
the resistance-capacitance detection circuit (83) being configured to provide detection about whether there exists a Powered device, PD; and
the xDSL signal processing circuit (84) being configured to process xDSL service data according to the xDSL signal.

7. A storage medium having stored therein computer programs configured to execute the reverse power supply method according to any one of claims 1 to 4.

8. A reverse power supply system, **characterized in that** it comprises: a power supply adapter (101) according to claim 5, a subscriber line (102), and x Digital Subscriber Line, xDSL, central office equipment (103) according to claim 6,
wherein the subscriber line (102) is configured to transmit the mixed signal to the xDSL central office equipment (103).

9. The reverse power supply system according to claim 8, further comprising xDSL terminal equipment (104) configured to transmit the xDSL signal to the power supply adapter (101) through an xDSL link

## Patentansprüche

1. Rückleistungsversorgungsverfahren, Folgendes umfassend:
Mischen eines Signals einer x digitalen Teilnehmerleitung, xDSL, und von Gleichstrom (101) durch einen Leistungsversorgungsadapter und
Übermitteln eines gemischten Signals an eine xDSL-Netzknotenausrüstung über eine Teilnehmerleitung (102) durch den Leistungsversorgungsadapter,
wobei das Mischen des x-DSL-Signals und des Gleichstroms durch den Leistungsversorgungsadapter Folgendes umfasst: Umwandeln eines Eingangswechselstroms in Gleichstrom durch eine Wechselstrom-Gleichstrom-Umwandlungsschaltung des Leistungsversorgungsadapters und Übertragen des Gleichstroms an einen ersten xDSL-Separator des Leistungsversorgungsadapters und Mischen des Gleichstroms und eines Eingangs-xDSL-Signals durch den ersten xDSL-Separator, oder
Umwandeln eine Eingangswechselstroms in Gleichstrom durch eine Wechselstrom-Gleichstrom-Umwandlungsschaltung des Leistungsversorgungsadapters und Übertragen des Gleichstroms an eine erste Filterschaltung des Leistungsversorgungsadapters und Mischen des Gleichstroms und eines Eingangs-xDSL-Signals durch die erste Filterschaltung,
dementsprechend umfasst das Verfahren ferner Folgendes:
nach dem Mischen des Gleichstroms und des Eingangs-xDSL-Signals durch den ersten xDSL-Separator Erkennen durch eine Energieversorgungsausrüstungs-(PSE-)Steuerschaltung des Leistungsversorgungsadapters, ob ein leistungsversorgtes Gerät, PD, vorhanden ist, und Bestimmen gemäß einem Erkennungsergebnis, ob das PD mit Leistung zu versorgen ist, oder
nach dem Mischen des Gleichstroms und des Eingangs-xDSL-Signals durch die erste Filterschaltung Erkennen durch eine PSE-Steuerschaltung des Leistungsversorgungsadapters, ob ein PD vorhanden ist, und Bestimmen gemäß einem Erkennungsergebnis, ob das PD mit Leistung zu versorgen ist,
**dadurch gekennzeichnet, dass** das Erkennen durch die PSE-Steuerschaltung des Leistungsversorgungsadapters, ob ein leistungsversorgtes Gerät, PD, vorhanden ist, Folgendes umfasst: Erkennen, ob ein charakteristischer Widerstand einer PD-Erkennungsschaltung in der xDSL-Netzknotenausrüstung in einem festgelegten Widerstandsbereich liegt und ob eine Kapazität in einem festgelegten Kapazitätsbereich liegt, und Bestimmen, dass das PD vorhanden ist, wenn Beurteilungsbedingungen des Widerstandes und der Kapazität erfüllt sind, und Bestimmen, dass kein PD vorhanden ist, wenn die Beurteilungsbedingungen des Widerstandes und der Kapazität nicht erfüllt sind.

2. Verfahren nach Anspruch 1, ferner Folgendes umfassend: vor dem Mischen des xDSL-Signals und des Gleichstroms durch den Leistungsversorgungsadapter Empfangen des von einer xDSL-Endgerätausrüstung gesendeten xDSL-Signals durch den Leistungsversorgungsadapter.

3. Verfahren nach Anspruch 1, ferner Folgendes umfassend: nach dem Übermitteln des gemischten Signals an die xDSL-Netzknotenausrüstung über die Teilnehmerleitung Separieren des gemischten Signals durch die xDSL-Netzknotenausrüstung, um Gleichstrom zu gewinnen, der von der xDSL-Netzknotenausrüstung benötigt wird.

4. Verfahren nach Anspruch 3, wobei das Separieren des gemischten Signals zum Gewinnen von für die xDSL-Netzknotenausrüstung erforderlichem Gleichstrom durch die xDSL-Netzknotenausrüstung Folgendes umfasst: Separieren des gemischten Eingangssignals durch einen zweiten xDSL-Separator der xDSL-Netzknotenausrüstung, um das xDSL-Signal und den Gleichstrom zu gewinnen, und Übertragen des Gleichstroms an eine Gleichstrom-Gleichstrom-Umwandlungsschaltung der xDSL-Netzknotenausrüstung und Umwandeln des Gleichstroms in den Gleichstrom, der für die xDSL-Netzknotenausrüstung erforderlich ist, durch die Gleichstrom-Gleichstrom-Umwandlungseinheit, oder
Separieren des gemischten Eingangssignals durch eine zweite Filterschaltung der xDSL-Netzknotenausrüstung, um das xDSL-Signal und den Gleichstrom zu gewinnen, und Übertragen des Gleichstroms an eine Gleichstrom-Gleichstrom-Umwandlungsschaltung der xDSL-Netzknotenausrüstung und Umwandeln des Gleichstroms in den Gleichstrom, der für die xDSL-Netzknotenausrüstung erforderlich ist, durch die Gleichstrom-Gleichstrom-Umwandlungseinheit.

5. Leistungsversorgungsadapter, eine Wechselstrom-Gleichstrom-Umwandlungseinheit (51, 61) und einen ersten x-Digitale-Teilnehmerleitungs-(xDSL-)Separator (52) oder eine erste Filterschaltung (62) umfassend,
wobei die Wechselstrom-Gleichstrom-Umwandlungseinheit (51, 61) dafür konfiguriert ist, Eingangswechselstrom in Gleichstrom umzuwandeln und den Gleichstrom an den ersten xDSL-Separator (52) oder die erste Filterschaltung (62) zu übertragen, und
wobei der erste xDSL-Separator (52) oder die erste Filterschaltung (62) dafür konfiguriert ist, den Gleichstrom und ein Eingangs-xDSL-Signal zu mischen,
wobei der Leistungsversorgungsadapter ferner Folgendes umfasst:
eine Leistungsversorgungsausrüstungs-(PSE-)Steuerschaltung (53, 63), die dafür konfiguriert ist zu erkennen, ob ein leistungsversorgtes Gerät, PD, vorhanden ist, und gemäß einem Erkennungsergebnis zu bestimmen, ob das PD mit Leistung zu versorgen ist,
**dadurch gekennzeichnet, dass** die PSE-Steuerschaltung (53, 63) erkennt, ob ein Widerstand einer PD-Erkennungsschaltung in der xDSL-Netzknotenausrüstung in einem festgelegten Widerstandsbereich liegt und ob eine Kapazität in einem festgelegten Kapazitätsbereich liegt, und bestimmt, dass das PD vorhanden ist, wenn Beurteilungsbedingungen des Widerstandes und der Kapazität erfüllt sind, und bestimmt, dass kein PD vorhanden ist, wenn die Beurteilungsbedingungen des Widerstandes und der Kapazität nicht erfüllt sind.

6. x-Digitale-Teilnehmerleitung-(xDSL-)Netzknotenausrüstung, Folgendes umfassend: eine zweite Filterschaltung (81) und eine Gleichstrom-Gleichstrom-Umwandlungseinheit (82),
wobei die zweite Filterschaltung (81) dafür konfiguriert ist, ein empfangenes gemischtes Signal zu separieren, um ein xDSL-Signal und Gleichstrom zu gewinnen, und den Gleichstrom an die Gleichstrom-Gleichstrom-Umwandlungseinheit (82) zu übertragen, und
wobei die Gleichstrom-Gleichstrom-Umwandlungseinheit (82) dafür konfiguriert ist, den Gleichstrom in Gleichstrom umzuwandeln, der von der zweiten Filterschaltung (81) benötigt wird,
wobei das gemischte Signal ein Signal ist, das durch einen Leistungsversorgungsadapter aus dem xDSL-Signal und dem Gleichstrom gemischt und über eine Teilnehmerleitung an die xDSL-Netzknotenausrüstung übermittelt wird,
**dadurch gekennzeichnet, dass** die xDSL-Netzknotenausrüstung ferner eine Widerstands-Kapazitäts-Erkennungsschaltung (83) und eine xDSL-Signal-Verarbeitungsschaltung (84) umfasst,
wobei die Widerstands-Kapazitäts-Erkennungsschaltung (83) dafür konfiguriert ist, eine Erkennung dazu bereitzustellen, ob ein leistungsversorgtes Gerät, PD, vorhanden ist, und
wobei die xDSL-Signal-Verarbeitungsschaltung (84) dafür konfiguriert ist, xDSL-Dienstdaten gemäß dem xDSL-Signal zu verarbeiten.

7. Speichermedium mit darin gespeicherten Computerprogrammen, die dafür konfiguriert sind, das Rückleistungsversorgungsverfahren nach einem der Ansprüche 1 bis 4 auszuführen.

8. Rückleistungsversorgungssystem, **dadurch gekennzeichnet, dass** es Folgendes umfasst: einen Leistungsversorgungsadapter (101) nach Anspruch 5, eine Teilnehmerleitung (102) und x-Digitale-Teilnehmerleitungs-(xDSL-)Netzknotenausrüstung (103) nach Anspruch 6,
wobei die Teilnehmerleitung (102) dafür konfiguriert ist, das gemischte Signal an die xDSL-Netzknotenausrüstung (103) zu übermitteln.

9. Rückleistungsversorgungssystem nach Anspruch 8, ferner xDSL-Endgerätausrüstung (104) umfassend, die dafür konfiguriert ist, das xDSL-Signal über eine xDSL-Verbindung an den Leistungsversorgungsadapter (101) zu übermitteln.

## Revendications

1. Procédé d'alimentation électrique inverse, comprenant les étapes ci-dessous consistant à :
mélanger, par le biais d'un adaptateur d'alimentation électrique, un signal de ligne d'abonné numérique « x », xDSL, et un courant continu, CC, (101) ; et
transmettre, par le biais de l'adaptateur d'alimentation électrique, un signal mélangé, à un équipement de central téléphonique de ligne xDSL, par l'intermédiaire d'une ligne d'abonné (102) ;
dans lequel l'étape de mélange, par le biais de l'adaptateur d'alimentation électrique, du signal de ligne xDSL et du courant CC, comprend les étapes ci-après consistant à : convertir, par le biais d'un circuit de conversion de courant alternatif en courant continu, CA-CC, de l'adaptateur d'alimentation électrique, un courant alternatif, CA, d'entrée, en courant CC, et transférer le courant CC vers un premier séparateur de ligne xDSL de l'adaptateur d'alimentation électrique, et mélanger, par le biais du premier séparateur de ligne xDSL, le courant CC et un signal de ligne xDSL d'entrée ; ou
convertir, par le biais d'un circuit de conversion CA-CC de l'adaptateur d'alimentation électrique, un courant CA d'entrée en un courant CC, transférer le courant CC vers un premier circuit de filtrage de l'adaptateur d'alimentation électrique, et mélanger, par le biais du premier circuit de filtrage, le courant CC et un signal de ligne xDSL d'entrée ;
de manière correspondante, le procédé comprend en outre les étapes ci-dessous consistant à :
suite à l'étape de mélange, par le biais du premier séparateur de ligne xDSL, du courant CC et du signal de ligne xDSL d'entrée, détecter, par le biais d'un circuit de commande d'équipement d'alimentation électrique, PSE, de l'adaptateur d'alimentation électrique, s'il existe un dispositif alimenté, PD, et déterminer s'il convient d'alimenter électriquement le dispositif PD selon un résultat de détection ; ou
suite à l'étape de mélange, par le biais du premier circuit de filtrage, du courant CC et du signal de ligne xDSL d'entrée, détecter, par le biais d'un circuit de commande d'équipement PSE de l'adaptateur d'alimentation électrique, s'il existe un dispositif PD, et déterminer s'il convient d'alimenter électriquement le dispositif PD selon un résultat de détection ;
**caractérisé en ce que** l'étape consistant à détecter, par le biais du circuit de commande d'équipement PSE de l'adaptateur d'alimentation électrique, s'il existe un dispositif PD, comprend les étapes ci-après consistant à : détecter si une résistance caractéristique d'un circuit de détection de dispositif PD dans l'équipement de central téléphonique de ligne xDSL se situe dans une plage de résistance définie et si la capacité se situe dans une plage de capacité définie ; et déterminer que le dispositif PD existe lorsque des conditions de détermination de la résistance et de la capacité sont satisfaites, et déterminer qu'il n'existe pas de dispositif PD lorsque les conditions de détermination de la résistance et de la capacité ne sont pas satisfaites.

2. Procédé selon la revendication 1, comprenant en outre l'étape ci-après consistant à : avant l'étape de mélange, par le biais de l'adaptateur d'alimentation électrique, du signal de ligne xDSL et du courant CC, recevoir, par le biais de l'adaptateur d'alimentation électrique, le signal de ligne xDSL envoyé par un équipement terminal de ligne xDSL.

3. Procédé selon la revendication 1, comprenant en outre l'étape ci-après consistant à : suite à la transmission du signal mélangé à l'équipement de central téléphonique de ligne xDSL par l'intermédiaire de la ligne d'abonné, séparer, par le biais de l'équipement de central téléphonique de ligne xDSL, le signal mélangé, en vue d'acquérir un courant CC requis par l'équipement de central téléphonique de ligne xDSL.

4. Procédé selon la revendication 3, dans lequel l'étape de séparation, par le biais de l'équipement de central téléphonique de ligne xDSL, du signal mélangé, en vue d'acquérir le courant CC requis par l'équipement de central téléphonique de ligne xDSL, comprend les étapes ci-dessous consistant à : séparer, par le biais d'un second séparateur de ligne xDSL de l'équipement de central téléphonique de ligne xDSL, le signal mélangé d'entrée pour acquérir le signal de ligne xDSL et le courant CC, transférer le courant CC à un circuit de conversion CC-CC de l'équipement de central téléphonique de ligne xDSL, et convertir, par le biais du circuit de conversion CC-CC, le courant CC en un courant CC requis par l'équipement de central téléphonique de ligne xDSL ; ou
séparer, par le biais d'un second circuit de filtrage de l'équipement de central téléphonique de ligne xDSL, le signal mélangé d'entrée pour acquérir le signal de ligne xDSL et le courant CC, transférer le courant CC vers un circuit de conversion CC-CC dans l'équipement de central téléphonique de ligne xDSL, et convertir, par le biais du circuit de conversion CC-CC, le courant CC en le courant CC requis par l'équipement de central téléphonique de ligne xDSL.

5. Adaptateur d'alimentation électrique, comprenant : un circuit de conversion de courant alternatif en courant continu, CA-CC, (51, 61), et un premier séparateur de ligne d'abonné numérique « x », xDSL, (52), ou un premier circuit de filtrage (62) ;
dans lequel le circuit de conversion CA-CC (51, 61) est configuré de manière à convertir un courant CA d'entrée en un courant CC, et à transférer le courant CC vers le premier séparateur de ligne xDSL (52) ou le premier circuit de filtrage (62) ; et
le premier séparateur de ligne xDSL (52) ou le premier circuit de filtrage (62) est configuré de manière à mélanger le courant CC et un signal de ligne xDSL d'entrée ;
dans lequel l'adaptateur d'alimentation électrique comprend en outre :
un circuit de commande d'équipement d'alimentation électrique, PSE, (53, 63), configuré de manière à détecter s'il existe un dispositif alimenté, PD, et à déterminer s'il convient d'alimenter électriquement le dispositif PD selon un résultat de détection ;
**caractérisé en ce que** le circuit de commande d'équipement PSE (53, 63) détecte si une résistance d'un circuit de détection de dispositif PD dans l'équipement de central téléphonique de ligne xDSL se situe dans une plage de résistance définie, et si une capacité se situe dans une plage de capacité définie, et détermine que le dispositif PD existe lorsque des conditions de détermination de la résistance et de la capacité sont satisfaites, et détermine qu'il n'existe pas de dispositif PD lorsque les conditions de détermination de la résistance et de la capacité ne sont pas satisfaites.

6. Équipement de central téléphonique de ligne d'abonné numérique « x », xDSL, comprenant : un second circuit de filtrage (81), et un circuit de conversion de courant continu en courant continu, CC-CC (82) ;
dans lequel le second circuit de filtrage (81) est configuré de manière à séparer un signal mélangé reçu en vue d'acquérir un signal de ligne xDSL et un courant CC, et à transférer le courant CC vers le circuit de conversion CC-CC (82) ; et
le circuit de conversion CC-CC (82) est configuré de manière à convertir le courant CC en un courant CC requis par le second circuit de filtrage (81) ;
dans lequel le signal mélangé est un signal mélangé à partir du signal de ligne xDSL et du courant CC, et transmis à l'équipement de central téléphonique de ligne xDSL par l'intermédiaire d'une ligne d'abonné par un adaptateur d'alimentation électrique ;
**caractérisé en ce que** l'équipement de central téléphonique de ligne xDSL comprend en outre un circuit de détection de résistance-capacité (83) et un circuit de traitement de signal de ligne xDSL (84) ;
le circuit de détection de résistance-capacité (83) étant configuré de manière à fournir une détection de l'existence éventuelle d'un dispositif alimenté, PD ; et
le circuit de traitement de signal de ligne xDSL (84) étant configuré de manière à traiter des données de service de ligne xDSL selon le signal de ligne xDSL.

7. Support de stockage dans lequel sont stockés des programmes informatiques configurés de manière à exécuter le procédé d'alimentation électrique inverse selon l'une quelconque des revendications 1 à 4.

8. Système d'alimentation électrique inverse, **caractérisé en ce qu'**il comprend : un adaptateur d'alimentation électrique (101) selon la revendication 5, une ligne d'abonné (102), et un équipement de central téléphonique de ligne d'abonné numérique « x », xDSL, (103), selon la revendication 6 ;
dans lequel la ligne d'abonné (102) est configurée de manière à transmettre le signal mélangé à l'équipement de central téléphonique de ligne xDSL (103).

9. Système d'alimentation électrique inverse selon la revendication 8, comprenant en outre un équipement terminal de ligne xDSL (104) configuré de manière à transmettre le signal de ligne xDSL à l'adaptateur d'alimentation électrique (101) par l'intermédiaire d'une liaison de ligne xDSL.
